# EUROPÄISCHE PATENTSCHRIFT

(11) **EP 2 156 027 B1**
(45) Veröffentlichungstag und Bekanntmachung des Hinweises auf die Patenterteilung: **20.10.2010**
(21) Anmeldenummer: 08758881.0
(22) Anmeldetag: 30.05.2008
(51) Int. Cl.: F16L 59/16

(54) **ISOLIERVORRICHTUNG FÜR EIN MASCHINENELEMENT, INSBESONDERE ABGASROHR**
INSULATING DEVICE FOR A MACHINE ELEMENT, IN PARTICULAR AN EXHAUST GAS PIPE
DISPOSITIF ISOLANT POUR UN ELEMENT DE MACHINE, NOTAMMENT UN TUYAU D'ECHAPPEMENT

(30) Priorität: 01.06.2007 DE 202007007857 U; 13.07.2007 DE 202007009806 U
(43) Veröffentlichungstag der Anmeldung: 24.02.2010
(73) Patentinhaber: BDD Beteiligungs GmbH, 68169 Mannheim (DE)
(72) Erfinder: BECKER, Michael, 67480 Edenkoben (DE)
(74) Vertreter: Schmitt, Meinrad
(86) Internationale Anmeldenummer: PCT/EP2008/004307
(87) Internationale Veröffentlichungsnummer: WO 2008/145374

(56) Entgegenhaltungen:
- EP-A- 1 134 478
- DE-A1- 10 328 470
- DE-A1- 19 702 755
- US-B1- 6 415 757

## Beschreibung

Die Erfindung bezieht sich auf eine Isoliervorrichtung für ein Maschinenelement, insbesondere Abgasrohr, gemäß den im Oberbegriff des Patentanspruchs 1 angegebenen Merkmalen.

Eine derartige Isoliervorrichtung ist aus der EP 1 134 478 B1 für ein als Abgasrohr ausgebildetes Maschinenelement bekannt, welches von einem heißen Medium, nämlich dem Abgas, eines als Verbrennungsmotor ausgebildeten Aggregats durchströmbar ist. Die Isoliervorrichtung enthält einen das Maschinenelement bzw. Abgasrohr umgebenden Innenmantel sowie einen zu diesem beabstandet angeordneten Außenmantel, wobei zwischen diesen Mänteln ein Hohlraum vorhanden ist, in welchen Isoliermaterial austauschbar eingefüllt ist. Der Innenmantel und der Außenmantel sind derart flexibel ausgebildet, dass diese durch Aufspreizen ihrer Enden über das Maschinenelement bzw. Abgasrohr geschoben werden können und nachfolgend mittels einer Befestigungsvorrichtung, welche beispielsweise als ein oder mehrere Spannbänder ausgebildet ist, unmittelbar auf dem mit dem Aggregat in bekannter Weise verbundenen Maschinenelement festlegbar ist. Diese Isoliervorrichtung hat sich für viele Anwendungsfälle gut bewährt, doch für weitere Anwendungsfälle besteht aufgrund besonderer Anforderungen ein erheblicher Bedarf nach hiervon abweichenden Lösungen. So ist für die Montage oder für Überprüfungs- oder Reparaturmaßnahmen ein nicht unerheblicher Aufwand erforderlich, um die Befestigungsvorrichtung und/oder zur Verbindung mit weiteren Komponenten vorhandene Schraubverbindungen zu lösen bzw. zu befestigen. Ist mit dem genannten ersten Maschinenelement wenigstens ein weiteres Maschinenelement, insbesondere ein Abgaskrümmer, verbunden, so ist dieses durch die vorbekannte Isoliervorrichtung nicht in der erforderlichen Weise isoliert.

Hiervon ausgehend liegt der Erfindung die Aufgabe zugrunde, die Isoliervorrichtung mit einem geringen konstruktiven Aufwand dahingehend weiterzubilden, dass die Montage oder Demontage in einfacher Weise erfolgen können und/oder dass erhöhte Anforderungen, insbesondere eine verbesserte Dämmwirkung, erreicht werden. Die Isoliervorrichtung soll zur Isolierung sowohl des erst genannten Maschinenelements, wie insbesondere ein Abgasrohr einer Verbrennungsmotor, als auch für wenigstens ein weiteres Maschinenelement, wie insbesondere Abgaskrümmer einer Brennkraftmaschine, ausgebildet sein. Die Isoliervorrichtung soll einen geringen Fertigungs- und/oder Materialaufwand erfordern, wobei ferner Eingriffe oder Änderungen des Aggregats und/oder der Maschinenelemente vermieden oder zumindest auf ein Minimum reduziert werden sollen. Ferner soll die Isoliervorrichtung an unterschiedlich ausgebildete Maschinenelemente anpassbar sein, wobei hier insbesondere auf Verbrennungsmotoren mit unterschiedlicher Anzahl von Zylindern oder auf Abgasturbolader verwiesen sei. Des Weiteren soll die Temperatur an der äußeren Oberfläche der Isoliervorrichtung derart reduziert werden und/oder die Isoliervorrichtung dahingehend ausgebildet sein, dass insbesondere durch aus dem Aggregat austretenden Kraftstoff, wie insbesondere Dieselkraftstoff oder solchen enthaltenden Dämpfe, kein Brand entsteht und ein insoweit mögliches Gefährdungspotential mit hoher Sicherheit ausgeschlossen werden kann. So soll die für Kraftstoffmotoren auf See bzw. in Schiffen geltende SOLAS-Anforderung (safety of life at seas) eingehalten werden, gemäß welcher u.a. gefordert wird, dass kein Bauteil an einem Motor, vor allem im Hinblick auf die Entzündlichkeit von Dieselkraftstoff, wärmer als 220° C sein darf.

Die Lösung dieser Aufgabe erfolgt gemäß den Merkmalen des Patentspruchs 1.

Die erfindungsgemäß vorgeschlagene Isoliervorrichtung zeichnet sich durch eine einfache und gleichwohl funktionsgerechte und sichere Konstruktion aus und kann ohne besonderen Aufwand mit dem Maschinenelement, insbesondere einem Abgasrohr, und/oder dem Aggregat, insbesondere einem Verbrennungsmotor, verbunden werden. Änderungen oder gar eine weitgehende Demontage, sei es des Maschinenelements oder des Aggregats, sind zur Montage und/oder Befestigung der Isoliervorrichtung nicht erforderlich. Somit kann die Isoliervorrichtung problemlos auch nachträglich in bestehende Systeme, insbesondere in Kraftfahrzeuge eingebaute Motoren, integriert werden. Die Isoliervorrichtung enthält grundsätzlich lediglich drei Standardelemente, nämlich eine mit dem Aggregat verbindbare Bodenplatte bzw. ein Bodenblech, wenigstens ein Einschubelement, insbesondere für das zweite Maschinenelement oder eine Krümmer-Anbindung an das Abgasrohr, sowie eine Haube, welche das und/oder die Maschinenelemente nach außen abschirmt. Es ist von besonderer Bedeutung, dass vor allem die Bodenplatte und/oder die Haube in bevorzugter Weise aus wenigstens zwei Teilen jeweils ausgebildet sind. So können insbesondere Motoren mit unterschiedlicher Anzahl von Zylinderköpfen und somit unterschiedlichen Längen, wie beispielsweise Motoren mit 10, 12, 16 oder 20 Zylinderköpfen, lediglich durch entsprechende Variation der Anzahl der Segmente der jeweiligen Standardelemente mit der Isoliervorrichtung versehen werden. Die Isoliervorrichtung besitzt eine hohe Stabilität in der Konstruktion und entspricht bei gleichwohl einfachem Aufbau den SOLAS-Anforderungen. Die Haube und/oder das oder die Einschubteile sind bevorzugt doppelwandig derart ausgeführt, dass in einem Zwischenraum zwischen der Außenwand und der Innenwand Isoliermaterial angeordnet ist.

Erfindungsgemäß ist die Isoliervorrichtung als Baukastensystem und/oder in Modulbauweise ausgebildet, wobei die einzelnen Systemkomponenten oder Module, insbesondere die genannten drei Standardelemente oder Segmente, entsprechend den jeweiligen Anforderungen miteinander kombiniert und zur Isoliervorrichtung zusammengefügt werden können. Für unterschiedliche Motorvarianten ist in vorteilhafter Weise lediglich die Haube anzupassen, wobei die übrigen Elemente und/oder die Verbindungen beibehalten werden. Insbesondere sind die Einschubelemente für sämtliche zweiten Maschinenelemente, insbesondere Abgaskrümmer, gleich ausgebildet. Für ein Aggregat, beispielsweise mit erhöhter Zylindervariante, gelangt in einfacher Weise wenigstens ein zusätzliches Standard-Segment der Bodenplatte, der Haube und des Einschubelements zum Einsatz, wobei beliebig viele Standard-Segmente in der erforderlichen Weise aneinandergereiht und/oder zusammengefügt werden. Darüber hinaus ist es von besonderer Bedeutung, dass zur Verbindung der Segmente einfache Klemmverbindungen und/oder Schnellverbindungen vorgesehen sind und vor allem keine service-relevanten Schraubverbindungen erforderlich sind. Somit ist jederzeit ein schneller und/oder problemloser Zugang zu dem oder den Maschinenelementen, insbesondere Abgasrohr oder Abgaskrümmer oder Kompensator oder Abgasturbolader, möglich. Durch Profile und/oder profilartige Ausbildung in den jeweiligen Verbindungsbereichen der Segmente wird eine dichte Verbindung zur Vermeidung eines unerwünschten Wärmeabflusses erreicht. Die Isoliervorrichtung ist bei Bedarf ohne besondere Werkzeuge, gegebenenfalls auch nur teilweise, demontierbar, wobei zunächst die Haube oder deren Segmente nach dem Lösen des oder der manuell betätigbaren Befestigungselemente entfernt werden kann. Mit der Haube bzw. deren Segmente sind gleichzeitig die mit Letzterem bevorzugt fest verbundenen Abschirmungen oder Abdeckbleche entfernbar. Nachfolgend werden die für das oder die weiteren Maschinenelemente vorgesehenen Einschubteile manuell aus den Führungen, insbesondere der Bodenplatte, herausgeschoben. Die Bodenplatte kann mit dem Aggregat verbunden bleiben, doch sind gleichwohl das erste Maschinenelement ebenso wie die weiteren Maschinenelemente nunmehr für etwaige Service- oder Reparaturmaßnahmen ohne Weiteres zugänglich. Die Montage bzw. erneute Montage oder der Zusammenbau der Isoliervorrichtung erfolgt in umgekehrter Reihenfolge.

Ferner sind insbesondere im Bereich der Zylinderzwischenräume weitere Elemente, insbesondere Abdeckbleche, angeordnet, welche mit der Haube fest verbunden sind, beispielsweise über Schraub- oder Schweiß- oder Nietverbindungen und/oder über eine Profilschiene. Diese Elemente schirmen die Zwischenräume zwischen den Zylinderköpfen sowie die Bereiche oder Räume mit den zweiten Maschinenelementen oben ab. Zwischen diesen Elementen und den Zylindern sind in bevorzugter Weise hitzebeständige Dichtungen an den Elementen und/oder Abdeckblechen vorgesehen, welche insbesondere eine am Zylinder bzw. Zylinderkopf dichtend anliegende Lippe, insbesondere hitzebeständige Gummilippe, enthalten. Somit sind die Zwischenräume vibrationsflexibel, aber gleichwohl flüssigkeitsdicht isoliert. Bereiche oder Räume mit den zweiten Maschinenelementen bzw. Abgaskrümmern werden unten und/oder zum Aggregat hin mittels seitlichen Ansätzen der Bodenplatte bzw. des Bodenblechs zumindest näherungsweise dicht verschlossen. Die Lippe, insbesondere Gummilippe, ist vor einer Scherwirkung geschützt angeordnet und/oder ausgebildet, so dass bei einem evtl. Kontakt eines Zylinders mit dem Element und/oder Abdeckblech Beschädigungen vermieden werden. Insbesondere die Einschubelemente sind mittels vorzugsweise U-förmig ausgebildeten Profilen oder Profilschienen, bevorzugt der Bodenplatte, bezüglich dieser sowohl dicht als auch in einfacher Weise montierbar oder demontierbar festgelegt. Die Abschirmung und/oder das Abdeckblech sind derart angeordnet, dass diese im montierten Zustand auf dem Aggregat weg von der Isoliervorrichtung nach unten geneigt angeordnet sind, so dass Flüssigkeit, wie insbesondere Dieselkraftstoff nach unten ablaufen kann. Des Weiteren ist die Isoliervorrichtung in vorteilhafter Weise mittels des Bodenblechs nur mit einer Komponente, insbesondere dem Aggregat, verbunden, während die übrigen Komponenten, wie Abgasrohr, Abgasturbolader, Kompensator, nicht mit der Isoliervorrichtung in Kontakt sind bzw. verbunden sind und folglich keine Anbindung an ggf. unterschiedlich vibrierende Komponenten vorhanden ist und folglich Schwierigkeiten und insbesondere unzulässige Belastungen der Isoliervorrichtung vermieden werden.

Weiterbildungen und besondere Ausgestaltungen der Erfindung sind in den Unteransprüchen und der nachfolgenden Figurenbeschreibung besonderer Ausführungsbeispiele angegeben. Es sei ausdrücklich darauf hingewiesen, dass die erfindungsgemäße Isoliervorrichtung nicht allein für den Einsatz oder in Kombination mit Motoren und Abgasleitungen derselben vorgesehen ist, sondern im Rahmen der Erfindung auch für beliebig ausgebildete Aggregate, wie Heißgasgebläse oder Turbinen und denselben zugeordneten Maschinenelementen für heiße Medien, wie Dampf oder heiße Verbrennungsluft, vorgesehen ist.

Die Erfindung wird nachfolgend anhand der in der Zeichnung dargestellten besonderen Ausführungsbeispiele näher erläutert, ohne dass insoweit eine Beschränkung erfolgt. Es zeigen schematisch in perspektivischer Darstellung:
- Fig. 1: die Isoliervorrichtung zusammen mit einem teilweise dargestellten Motor samt Abgasrohren und Abgaskrümmer,
- Fig. 2: die Bodenplatte,
- Fig. 3: das Einschubelement,
- Fig. 4: die Isoliervorrichtung ohne Motor bzw. Abgasrohre,
- Fig. 5: eine weitere Isoliervorrichtung für einen Abgasturbolader.

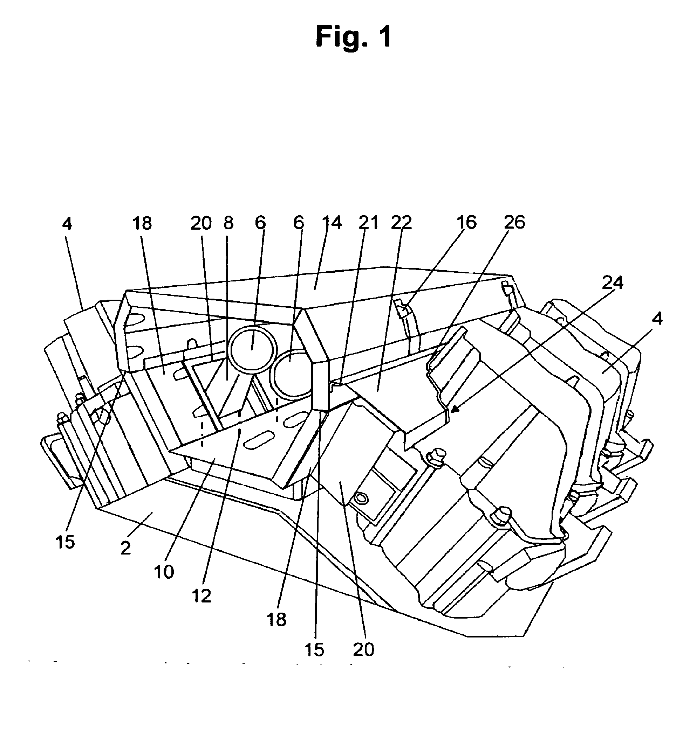

Figur 1 zeigt teilweise und schematisch einen Motor 2 mit mehreren Zylindern bzw. Zylinderköpfen 4 und zwei erste Maschinenelemente, welche als Abgasrohre 6 ausgebildet sind und mit welchen in bekannter Weise zweite Maschinenelemente bzw. Abgaskrümmer 8 verbunden sind. Die Isoliervorrichtung enthält ein Bodenblech 10, welches mit dem Motor 2 fest verbunden ist, beispielsweise mittels durch strichpunktierte Linien angedeutete Schrauben 12. Die Isoliervorrichtung enthält ferner eine Haube 14, welche mittels Befestigungselementen 16 manuell lösbar mit dem Bodenblech 10 verbunden ist. Die Haube 14 ist in bevorzugter Weise doppelwandig ausgebildet, wobei im Hohlraum zwischen der Außenwand und der Innenwand bevorzugt Isoliermaterial angeordnet ist. Die Haube 14 weist auf beiden Seiten, welche den jeweiligen Reihen von Zylinderköpfen 4 benachbart angeordnet und/oder zugeordnet sind, jeweils eine in vorteilhafter Weise in Längsrichtung durchgehende Unterkante 15 auf. Die Befestigungselemente 16 sind vorteilhaft als manuell betätigbare Spannverschlüsse ausgebildet. Das Bodenblech 10 enthält ferner den Bereichen zwischen benachbarten Zylinderköpfen zugeordnete und nach oben abgewinkelte Seitenteile 18, wobei in Längsrichtung des Motors 2 zwischen benachbarten Seitenteilen 18 der jeweilige Abgaskrümmer 8 durchgreift. In den Zwischenräumen ist jeweils ein an den Abgaskrümmer 8 angepasstes Einschubteil 20 vorgesehen, welches U-förmig oder kappenförmig und nach unten zum Motor hin offen ausgebildet ist. Die Haube 14 liegt mit ihren genannten Unterkanten 15 auf den oberen Endbereichen der Seitenteile 18 und bevorzugt auch auf den oberen Enden der Einschubteile 20 dicht auf. Mittels der lösbaren Befestigungselemente 16 wird in bevorzugter Weise eine feste und/oder dichte gegenseitige Anlage, bevorzugt mit vorgegebener Vorspannung, der Haube auf den Seitenteilen 18 und/oder den Einschubteilen 20 sicher gestellt.

Das Einschubteil 20 ist nach unten bzw. in Richtung zum Motor 2 offen ausgebildet und kann somit nach der Befestigung des Bodenblechs 10 auf dem Motor 2 von oben her eingeschoben werden. Zur Demontage können nach dem Lösen und Abnehmen der Haube 14 die Einschubteile 20 in einfacher Weise nach oben herausgeschoben werden, ohne dass hierzu Werkzeuge, beispielsweise zum Lösen von Schrauben, erforderlich sind. Im Verbindungsbereich des jeweiligen Einschubteils 20 mit den benachbarten Seitenteilen 18 sind diese profilartig ausgebildet und/oder Profile derart vorgesehen, dass eine dichte Verbindung zwischen den Seitenteilen 18 und dem Einschubteil 20 vorhanden ist. Die Einschubteile liegen mit ihren den Zylinderköpfen zugewandten Seitenkanten und/oder Seitenflächen insbesondere dicht an den jeweiligen Zylinderköpfen an.

Darüber hinaus enthält die Isoliervorrichtung eine insbesondere an der Haube 14, insbesondere mittels einer Profilschiene 21, befestigte Abschirmung und/oder ein Abdeckblech 22, zwecks Abschirmung der zwischen den Zylindern 4 untereinander sowie der zur Haube hin vorhandenen Zwischenräume. Wie ersichtlich, enthält die Abschirmung 22 an die Außenkontur der Zylinder bzw. Zylinderköpfe 4 angepasste Ausnehmungen 24, wobei zwischen den Rändern der Ausnehmungen 24 und der zugeordneten Außenkontur des jeweiligen Zylinderkopfes 4 ein Spalt vorhanden ist. In diesem Spalt ist eine Dichtung 26 aus hitzebeständigem Material angeordnet, welche bevorzugt eine am Zylinderkopf 4 außen anliegende Lippe aufweist. Die Richtung 26, welche an die Außenkontur des Zylinderkopfes 4 angepasst ist, ist bevorzugt mit der Abschirmung 22 fest verbunden.

Die Isoliervorrichtung ist erfindungsgemäß zwischen den beiden seitlichen Zylinderkopfreihen, welche in diesem Ausführungsbeispiel jeweils drei Zylinderköpfe 4 aufweisen, auf dem Verbrennungsmotor 2 angeordnet, wobei insgesamt sechs übereinstimmend ausgebildete Einschubteile 20 vorgesehen sind, welche die jeweiligen Abgaskrümmer 8 übergreifen. Enthält der Motor abweichend vom dargestellten Ausführungsbeispiel eine andere Anzahl von Zylinderköpfen 4, so ist analog hierzu dem jeweiligen Zylinderkopf ein dessen Abgaskrümmer übergreifendes Einschubelement zugeordnet. Weiterhin können im Rahmen der Erfindung bei Motoren mit beispielsweise zehn oder mehr Zylinderköpfen zwei oder mehrere Bodenbleche 10 und/oder Hauben 14 bzw. deren Segmente in Längsrichtung des Motors hintereinander und dicht aneinander liegend angeordnet sein, wobei die Einschubelemente 20 jeweils übereinstimmend ausgebildet sind.

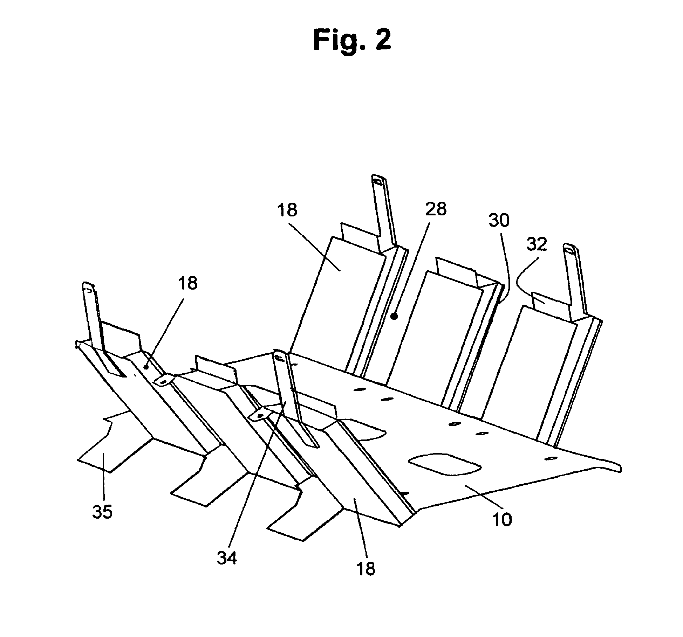

Figur 2 zeigt das Bodenblech 10 mit den Seitenteilen 18, zwischen welchen die genannten Zwischenräume 28 für die Abgaskrümmer vorhanden sind. Die Seitenteile 18 sind entsprechend der Motorkonstruktion und/oder Anordnung der Zylinder nach oben und/oder in Richtung zur Haube abgewinkelt und enthalten die bereits erwähnten Profile 30, 32 für die Einschubteile. Weiterhin weisen die Seitenteile 18 an den oberen Enden und über diese vorstehende Verlängerungen bzw. Laschen 34 auf, welche den genannten Befestigungselementen oder Spannverschlüssen zwecks lösbarer Festlegung der Haube zugeordnet sind. Die Seitenteile sind in zweckmäßiger Weise, ebenso wie die Haube doppelwandig unter Bildung eines Hohlraumes ausgebildet, in welchem Isoliermaterial angeordnet ist. Ferner enthält die Bodenplatte 10, bevorzugt einteilig mit dieser, die vorstehend erwähnten seitlichen Ansätze 35, welche die Räume mit den zweiten Maschinenelementen bzw. Abgaskrümmern nach unten abschirmen. Die Außenwand oder die Innenwand des Seitenteils 18 ist in bevorzugter Weise einteilig mit der Bodenplatte oder dem Bodenblech 10 ausgebildet.

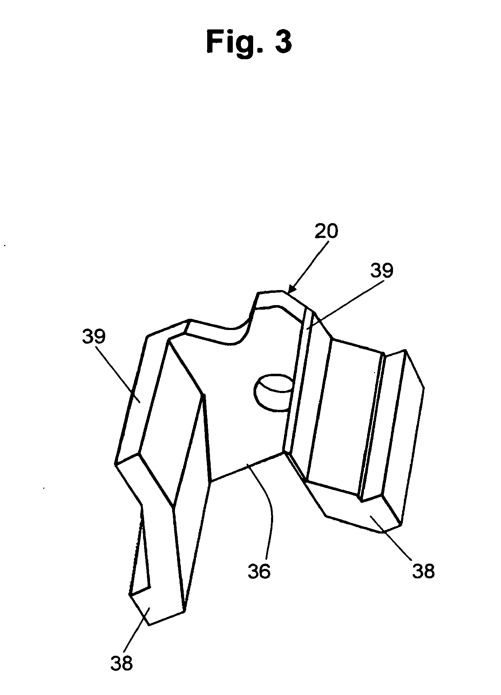

Figur 3 zeigt ein Einschubteil 20, welches U-förmig und/oder kappenartig ausgebildet ist und eine Ausnehmung 36 enthält, durch welche im montierten Zustand der Abgaskrümmer durchgreift. Die Ausnehmung 36 und/oder das Einschubteil 20 sind nach unten in Richtung zum Bodenblech und/oder Aggregat erfindungsgemäß derart offen ausgebildet, dass das Einschubteil 20 nach oben und/oder weg von der Bodenplatte bzw. dem Aggregat herausgeschoben werden kann bzw. umgekehrt in den Zwischenraum zwischen den Seitenteilen eingeschoben werden kann. Erfindungsgemäß ist die Breite der Ausnehmung 36 zumindest gleich groß wie der Außendurchmesser oder die Breite der zweiten Maschinenteils. Die Kanten 38 des Einschubteils 20 sind an die Profile oder Profilschienen der Seitenteile des Bodenblechs derart angepasst, dass das Einschubteil 20 zwischen benachbarte Seitenteile abdichtend eingeschoben werden kann. In einer alternativen Ausgestaltung können umgekehrt die Einschubteile 20 bevorzugt U-förmige Profile aufweisen, deren Schenkel die Außenwand und Innenwand des jeweiligen Seitenteils umgreifen. Die dem Zylinderkopf zugewandten und/oder zugeordneten Seitenkanten oder Seitenflächen 39 des Einschubteils 20 liegen bevorzugt dicht am jeweiligen Zylinderkopf an.

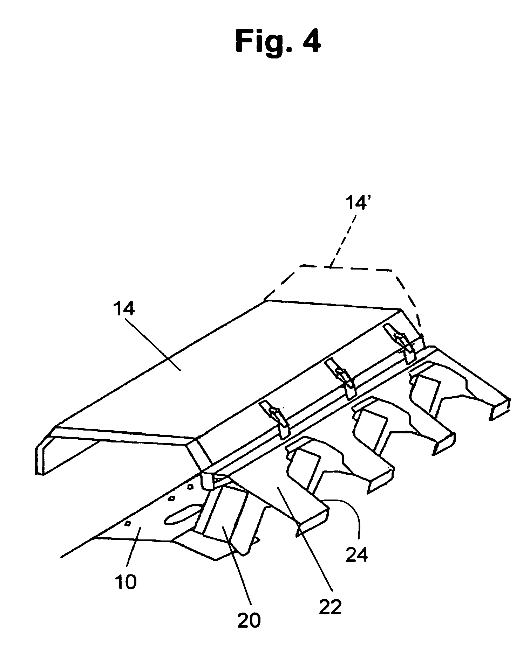

Figur 4 zeigt die Isoliervorrichtung mit dem Bodenblech 10, der Haube 14 sowie den Einschubteilen 20, wobei der Einfachheit halber lediglich die auf der einen Seite vorhandenen Einschubteile 20 sowie das mit der Haube 14 verbundene Abdeckblech 22 dargestellt sind. Auch die in den Ausnehmungen 24 des Abdeckblechs 22 angeordneten Dichtungen sind hier nicht dargestellt. Mit gestrichelter Linie 14' ist eine Variante der Haube bzw. eine zusätzliche Haube für eine alternative Ausbildung des Motors bzw. dessen Abgasrohren oder ein zusätzliches Maschinenelement oder Rohr angedeutet.

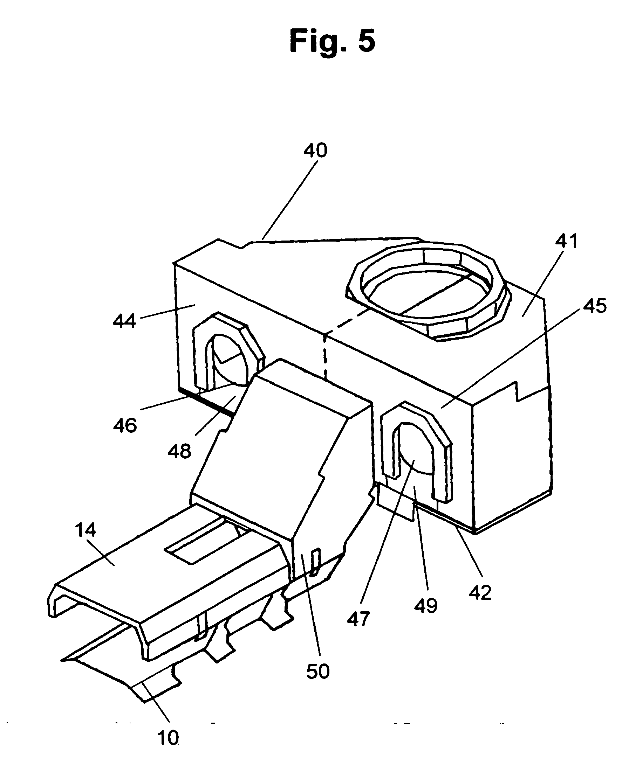

In Figur 5 ist ein weiteres Ausführungsbeispiel der Isoliervorrichtung für ein als Abgasturbolader ausgebildetes Aggregat dargestellt. Diese Isoliervorrichtung enthält zwei Hauben 40, 41, welche den hier nicht dargestellten Abgasturbolader übergreifen. Diese Hauben 40, 41 sind mit einer Bodenplatte 42 verbunden, welche auf dem Abgasturbolader oder Teilen desselben festgelegt ist. Ferner sind seitliche Abdeckungen 44, 45 vorgesehen, welche zweckmäßig als Einschubteile ausgebildet sind und welche Ausnehmungen 46, 47 zur Durchführung von Rohren des Abgasturboladers enthalten. Die Ausnehmungen 46, 47 der Einschubteile 44, 45 sind nach unten zur Bodenplatte (42) hin offen ausgebildet, welche nach oben abgewinkelte Begrenzungsteile 48, 49 der Ausnehmungen 46, 47 aufweist. Diese Isoliervorrichtung ist über eine als Zwischenstück ausgebildete Haube 50 an die anhand der Figuren 1 bis 4 erläuterte Ausführungsform der Isoliervorrichtung mit der Haube 14 und dem Bodenblech 10 angeschlossen. Die Haube 50 überdeckt Verbindungsrohre, welche einerseits an die erläuterten Abgasrohre und andererseits an dem oder die Abgasturbolader innerhalb dieser Isoliervorrichtung angeschlossen sind.

### Bezugszeichen

- 2: Aggregat / Motor
- 4: Zylinder / Zylinderkopf
- 6: erstes Maschinenelement / Abgasrohr
- 8: zweites Maschinenelement / Abgaskrümmer
- 10: Bodenplatte / Bodenblech
- 12: strichpunktierte Linie / Schraube
- 14, 14': Haube
- 15: Unterkante von 14
- 16: Befestigungselement / Spannverschluß
- 18: Seitenteil
- 20: Einschubteil
- 21: Profilschiene
- 22: Abschirmung / Abdeckblech
- 24: Ausnehmung in 22
- 26: Dichtung
- 28: Zwischenraum
- 30, 32: Profil
- 34: Lasche von 18
- 35: seitlicher Ansatz von 10
- 36: Ausnehmung in 20
- 38: Kante von 20
- 39: Seitenkante / Seitenfläche von 20
- 40, 41: weitere Haube
- 42: Bodenplatte
- 44, 45: Abdeckung
- 46, 47: Ausnehmung
- 48, 49: Begrenzungsteil von 42
- 50: Zwischenstück / Haube

## Patentansprüche

1. Isoliervorrichtung für ein erstes Maschinenelement (6), insbesondere Abgasrohr, und wenigstens ein zweites mit diesem verbundenes Maschinenelement (8), insbesondere Abgaskrümmer, welche von einem insbesondere heißen Medium durchströmbar und mit einem Aggregat (2) verbunden sind, wobei die Isoliervorrichtung das Maschinenelement (6) zumindest teilweise umgibt und bezüglich dem Aggregat (2) festlegbar ist,
**dadurch gekennzeichnet, dass** die Isoliervorrichtung eine mit dem Aggregat (2) verbindbare Bodenplatte (10) umfasst, welche wenigstens zwei unter Bildung eines Zwischenraumes (28) beabstandet angeordnete Seitenteile (18) aufweist,
dass in dem Zwischenraum (28) ein Einschubteil (20) der Isoliervorrichtung angeordnet ist,
welches mit den Seitenteilen (18) mittels Führungen und/oder Profilen (30, 32) im Wesentlichen dicht verbunden und bezüglich der Bodenplatte (10) lösbar ausgebildet ist,
dass das Einschubteil (20) eine Ausnehmung (36) enthält, durch welche das zweite Maschinenelement (8) hindurch führbar ist und welche in Richtung zur Bodenplatte (10) und/oder zum Aggregat (2) offen ausgebildet ist,
und dass ferner die Isoliervorrichtung eine mittels lösbarer Befestigungselemente (16) mit der Bodenplatte (10) verbindbare Haube (14) aufweist, welche das erste Maschinenelement (6) übergreifen kann,
wobei die Haube (14) mit ihren Unterkanten (15) auf zugeordneten Bereichen der Seitenteile (18) der Bodenplatte (10) und/oder des oder der Einschubteile (20) aufliegt.

2. Isoliervorrichtung nach Anspruch 1, **dadurch gekennzeichnet, dass** die Seitenteile (18) zur Bodenplatte (10) und/oder in Richtung zur Haube (14) abgewinkelt und in Längsrichtung beabstandet zueinander angeordnet sind und/oder dass zwischen benachbarten Seitenteilen (18) jeweils ein Einschubteil (20) angeordnet ist, wobei das jeweilige Einschubteil (20) und die zugeordneten Seitenteile (18) die miteinander korrespondierenden Führungen und/oder Profile (30, 32) aufweisen.

3. Isoliervorrichtung nach Anspruch 1 oder 2, **dadurch gekennzeichnet, dass** die Haube (14) und/oder die Einschubteile (20) mit der Bodenplatte (10) und/oder deren Seitenteilen (18) manuell und/oder ohne Werkzeug lösbar verbunden sind.

4. Isoliervorrichtung nach einem der Ansprüche 1 bis 3, **dadurch gekennzeichnet, dass** das Einschubteil (20) der Isoliervorrichtung U-förmig oder kappenartig ausgebildet ist und/oder dass das Einschubteil (20) der Isoliervorrichtung Seitenkanten oder Seitenflächen (39) aufweist.

5. Isoliervorrichtung nach einem der Ansprüche 1 bis 4, **dadurch gekennzeichnet, dass** die Isoliervorrichtung an wenigstens einer Längsseite, zweckmäßig an beiden Längsseiten, bevorzugt an der abnehmbar ausgebildeten Haube (14), eine Abschirmung und/oder ein Abdeckblech (22) aufweist, welches Zwischenräume zu seitlich des Aggregats (2) angeordneten Bauteilen, insbesondere den Zylinderköpfen (4), übergreifen kann.

6. Isoliervorrichtung nach Anspruch 5, **dadurch gekennzeichnet, dass** die Abschirmung und/oder das Abdeckblech Ausnehmungen (24) enthält, welche auf die Außenkontur der genannten Bauteile, insbesondere Zylinderköpfe (4), insbesondere unter Bildung eines vorgegebenen Spalts, ein passbar sind, wobei in dem Spalt bevorzugt eine Dichtung (26) vorgesehen ist, welche insbesondere aus einem hitzebeständigem Material besteht und/oder welche eine Dichtlippe aufweist.

7. Isoliervorrichtung nach einem der Ansprüche 1 bis 6, **dadurch gekennzeichnet, dass** die Abschirmung und/oder das Abdeckblech (22) im montierten Zustand auf dem Aggregat (2) relativ zur Haube (14) abgewinkelt sind.

8. Isoliervorrichtung nach einem der Ansprüche 1 bis 7, **dadurch gekennzeichnet, dass** die Seitenteile (18) oder eine Wand derselben einteilig mit der Bodenplatte (10) ausgebildet sind.

9. Isoliervorrichtung nach einem der Ansprüche 1 bis 8, **dadurch gekennzeichnet, dass** die Bodenplatte (10) beabstandet zueinander angeordnete seitliche Ansätze (35) aufweist, welche insbesondere einteilig mit der Bodenplatte (10) ausgebildet sind, und/oder dass die Bodenplatte (10) an den beiden Längsseiten die dort beabstandet zueinander angeordneten seitlichen Ansätze (35) aufweist.

10. Isoliervorrichtung nach einem der Ansprüche 1 bis 9, **dadurch gekennzeichnet, dass** die Haube (14) und/oder das oder die Einschubteile (20) doppelwandig ausgebildet sind, wobei in einem zwischen einer Außenwand und einer Innenwand vorhandenen Hohlraum bevorzugt Isoliermaterial angeordnet ist.

11. Isoliervorrichtung nach einem der Ansprüche 1 bis 10, **dadurch gekennzeichnet, dass** die Befestigungselemente (16) als Schnell- und/oder Spannverschlüsse ausgebildet sind.

12. Isoliervorrichtung nach einem der Ansprüche 1 bis 11, **dadurch gekennzeichnet, dass** die Isoliervorrichtung insbesondere in Längsrichtung des Aggregats (2) eine dessen Größe und/oder Ausbildung entsprechende Anzahl von Bodenplatten (10) und/oder Hauben (14) und/oder Einschubteilen (20) aufweisen kann.

13. Verwendung einer Isoliervorrichtung nach einem der Ansprüche 1 bis 4, **dadurch gekennzeichnet, dass** die Isoliervorrichtung zwischen zwei Reihen von Zylinderköpfen (4) des als Verbrennungsmotor ausgebildeten Aggregats (2) angeordnet wird, wobei innerhalb der Isoliervorrichtung wenigstens ein gemeinsames Abgasrohr (6) angeordnet ist und wobei die mit den Zylinderköpfen (4) verbundenen Abgaskrümmer durch die Ausnehmung (36) des zugeordnetes Einschubteils (20) hindurch geführt und im Inneren der Isoliervorrichtung mit dem Abgasrohr (6) verbunden sind.

## Claims

1. An insulation device for a first machine element (6), in particular an exhaust pipe, and at least a second machine element (8), connected with the first machine element, in particular an exhaust elbow, through which a particularly hot medium can flow, and which are connected with a power plant (2), wherein
the insulation device surrounds the machine element (6) at least partially and can be fixed with reference to the power plant (2),
**characterised in that** the insulation device comprises a base plate (10) that can be connected with the power plant (2), which base plate has at least two side parts (18) arranged spaced apart to form an intermediate space (28),
**in that** an insert (20) of the insulation device is arranged in the intermediate space (28), which is designed such that it is connected essentially in a sealed manner with the side parts (18) by means of guides and/or profiles (30, 32), and such that it can be released with reference to the base plate (10),
**in that** the insert (20) includes an opening (36), through which the second machine element (8) can be guided, and which is designed to be open in the direction towards the base plate (10) and/or towards the power plant (2),
and furthermore **in that** the insulation device has a cover (14) that can be connected with the base plate (10) by means of attachment elements (16) that can be released, which cover can overlap the first machine element (6), wherein
the cover (14) with its lower edges (15) is supported on assigned regions of the side parts (18) of the base plate (10) and/or of the one or more inserts (20).

2. The insulation device according to Claim 1,
**characterised in that** the side parts (18) are angled towards the base plate (10) and/or in the direction towards the cover (14), and in the longitudinal direction are arranged spaced apart from one another, and/or
**in that** an insert (20) is arranged in each case between adjacent side parts (18), wherein
the insert (20) in question and the associated side parts (18) have the guides and/or profiles (30, 32) corresponding with one another.

3. The insulation device according to Claim 1 or 2,
**characterised in that** the cover (14) and/or the inserts (18) are connected with the base plate (10) and/or its side parts (18) such that they can be released manually and/or without a tool.

4. The insulation device according to one of the Claims 1 to 3,
**characterised in that** the insert (20) of the insulation device is designed in a U-shape or in the form of a cap, and/or
**in that** the insert (20) of the insulation device has side edges or side faces (39).

5. The insulation device according to one of the Claims 1 to 4,
**characterised in that** the insulation device on at least one longitudinal side, advantageously on both longitudinal sides, preferably has on the detachably designed cover (14) a shield and/or a cover plate (22) which can overlap intermediate spaces to components arranged laterally on the power plant (2), in particular the cylinder heads (4).

6. The insulation device according to Claim 5,
**characterised in that** the shield and/or the cover plate includes recesses (24), which are matched to the outer contour of the components cited, in particular cylinder heads (4), and in particular with the formation of a prescribed clearance, wherein
a seal (26) is preferably provided in the clearance, which seal in particular consists of a heat-resistant material and/or which has a seal lip.

7. The insulation device according to one of the Claims 1 to 6,
**characterised in that** the shield and/or the cover plate (22) in the mounted state on the power plant (2) are angled relative to the cover (14).

8. The insulation device according to one of the Claims 1 to 7,
**characterised in that** the side parts (18), or one wall of the same, are integrally designed with the base plate (10).

9. The insulation device according to one of the Claims 1 to 8,
**characterised in that** the base plate (10) has side appendages (35), arranged spaced apart from one another, which in particular are integrally designed with the base plate (10), and/or
**in that** the base plate (10) has the side appendages (35), arranged spaced apart from one another, on the two longitudinal sides.

10. The insulation device according to one of the Claims 1 to 9,
**characterised in that** the cover (14) and/or the one or more inserts (20) are of double-walled design, wherein
an insulation material is preferably arranged in a cavity present between an outer wall and an inner wall.

11. The insulation device according to one of the Claims 1 to 10,
**characterised in that** the attachment elements (16) are designed as rapid release fasteners and/or toggle-type fasteners.

12. The insulation device according to one of the Claims 1 to 11,
**characterised in that** the insulation device can have a number of base plates (10) and/or covers (14) and/or inserts (20) corresponding to its size and/or design, in particular in the longitudinal direction of the power plant (2).

13. The use of an insulation device according to one of the Claims 1 to 4,
**characterised in that** the insulation device is arranged between two rows of cylinder heads (4) of the power plant (2), designed as an internal combustion engine, wherein
within the insulation device at least one common exhaust pipe (6) is arranged and wherein
the exhaust elbows connected with the cylinder heads (4) are guided through the opening (36) of the associated insert (20) and in the interior of the insulation device are connected with the exhaust pipe (6).

## Revendications

1. Dispositif d'isolation pour un premier élément de machine (6), en particulier un tuyau d'échappement de gaz, et au moins un deuxième élément de machine (8) relié à celui-ci, en particulier un collecteur de gaz d'échappement, qui peuvent être traversés par un fluide, en particulier un fluide chaud, et sont reliés à un agrégat (2), le dispositif d'isolation entourant au moins partiellement l'élément de machine (6) et pouvant être fixé par rapport à l'agrégat (2),
**caractérisé en ce que** le dispositif d'isolation comprend un plaque de base (10) apte à être reliée à l'agrégat (2), comportant au moins deux parties latérales (18) espacées, disposées de manière à former un espace intermédiaire (28),
**en ce qu'**une pièce d'insertion (20) du dispositif d'isolation est placée dans l'espace intermédiaire (28), tout en étant reliée essentiellement de façon serrée aux parties latérales (18), au moyen de guidages et/ou de profils (30, 32), et conçue de manière amovible par rapport à la plaque de base (10),
**en ce que** la pièce d'insertion (20) comprend un évidement (36) à travers lequel le deuxième élément de machine (8) peut être introduit, et qui est ouvert en direction de la plaque de base (10) et/ou de l'agrégat (2),
et **en ce que** le dispositif d'isolation comporte en outre un bonnet (14) apte à être relié à la plaque de base (10) au moyen d'éléments de fixation (16) amovibles, lequel peut recouvrir le premier élément de machine (6), le bonnet (14) s'appliquant avec ses bords inférieurs (15) sur des zones correspondantes des parties latérales (18) de la plaque de base (10) et/ou de la ou des pièce(s) d'insertion (20).

2. Dispositif d'isolation selon la revendication 1, **caractérisé en ce que** les parties latérales (18) sont coudées par rapport à la plaque de base (10) et/ou en direction du bonnet (14), et disposées de façon espacée l'une par rapport à l'autre, et/ou **en ce qu'**une pièce d'insertion (20) est à chaque fois insérée entre deux parties latérales (18) voisines, où chacune des pièces d'insertion (10) et les parties latérales correspondantes (18) comportent les guidages et/ou profils (30, 32) correspondant les uns avec les autres.

3. Dispositif d'isolation selon la revendication 1 ou 2, **caractérisé en ce que** le bonnet (14) et/ou les pièces d'insertion (20) sont reliées de façon détachable à la plaque de base (10) et/ou aux parties latérales (18), manuellement et/ou sans outil.

4. Dispositif d'isolation selon l'une des revendications 1 à 3, **caractérisé en ce que** la pièce d'insertion (20) du dispositif d'isolation est conçue en forme de U ou en forme de capuchon, et/ou **en ce que** la pièce d'insertion (20) du dispositif d'isolation comporte des bords latéraux ou des surfaces latérales (39).

5. Dispositif d'isolation selon l'une des revendications 1 à 4, **caractérisé en ce que** le dispositif d'isolation comporte un blindage et/ou une tôle couvrante (22), sur au moins un côté longitudinal, avantageusement sur les deux côtés longitudinaux, de préférence sur le bonnet (14) conçu de façon amovible, qui peut recouvrir des espaces intermédiaires par rapport à des pièces disposées à côté de l'agrégat (2), en particulier des têtes de cylindre (4).

6. Dispositif d'isolation selon la revendication 5, **caractérisé en ce que** le blindage et/ou la tôle couvrante comprend des évidements (24) aptes à être adaptés au contour extérieur desdites pièces, en particulier des têtes de cylindre (4), en particulier en formant une fente prédéfinie, un dispositif d'étanchéité (26) étant de préférence prévu dans la fente, celui-ci étant constitué en particulier d'un matériau thermorésistant et/ou comportant une lèvre d'étanchéité.

7. Dispositif d'isolation selon l'une des revendications 1 à 6, **caractérisé en ce qu'**à l'état monté sur l'agrégat (2), le blindage et/ou la tôle couvrante (22) sont coudés par rapport au bonnet (14).

8. Dispositif d'isolation selon l'une des revendications 1 à 7, **caractérisé en ce que** les parties latérales (18) ou une paroi de celles-ci sont/est conçue(s) en une seule pièce avec la plaque de base (10).

9. Dispositif d'isolation selon l'une des revendications 1 à 8, **caractérisé en ce que** la plaque de base (10) comporte des appendices latéraux (35), espacés les uns des autres et conçus en particulier en une seule pièce avec la plaque de base (10), et/ou **en ce que** la plaque de base (10) comporte, sur ses deux côtés longitudinaux, les appendices latéraux (35) disposés de façon espacée les uns par rapport aux autres.

10. Dispositif d'isolation selon l'une des revendications 1 à 9, **caractérisé en ce que** le bonnet (14) et/ou la ou les pièce(s) d'insertion (20) sont conçus avec une double paroi, un matériau isolant étant de préférence disposé dans un espace creux formé entre une paroi extérieure et une paroi intérieure.

11. Dispositif d'isolation selon l'une des revendications 1 à 10, **caractérisé en ce que** les éléments de fixation (16) sont conçus comme des moyens de fermeture rapide et/ou de serrage.

12. Dispositif d'isolation selon l'une des revendications 1 à 11, **caractérisé en ce que** le dispositif d'isolation peut comporter, en particulier dans le sens longitudinal de l'agrégat (2), un certain nombre de plaques de base (10) et/ou de bonnets (14) et/ou de pièces d'insertion (20), correspondant aux dimensions et/ou à la forme de celui-ci.

13. Utilisation d'un dispositif d'isolation selon l'une des revendications 1 à 4, **caractérisée en ce que** le dispositif d'isolation est placé entre deux rangées de têtes de cylindre (4) de l'agrégat (2) conçu comme un moteur à combustion, dans laquelle au moins un tuyau d'échappement commun (6) est prévu à l'intérieur du dispositif d'isolation, et dans laquelle les collecteurs de gaz d'échappement reliés aux têtes de cylindre (4) sont guidés à travers l'évidement (36) de la pièce d'insertion (20) correspondante, et reliés au tuyau d'échappement (6) à l'intérieur du dispositif d'isolation.
